(19) Europäisches Patentamt
European Patent Office
Office européen des brevets

(11) **EP 4 488 890 A1**

(12) **EUROPEAN PATENT APPLICATION**
published in accordance with Art. 153(4) EPC

(43) Date of publication:
**08.01.2025 Bulletin 2025/02**

(51) International Patent Classification (IPC):
***G06N 20/00*** (2019.01)

(21) Application number: **23773922.2**

(22) Date of filing: **22.03.2023**

(52) Cooperative Patent Classification (CPC):
**G06F 18/2135; G06F 21/62; G06N 3/098; G06N 20/00; H04W 4/38**

(86) International application number:
**PCT/CN2023/083106**

(87) International publication number:
**WO 2023/179675 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.03.2022 CN 202210303188**

(71) Applicant: **Huawei Technologies Co., Ltd.**
**Shenzhen, Guangdong 518129 (CN)**

(72) Inventors:
• **MA, Mengyao**
**Shenzhen, Guangdong 518129 (CN)**
• **XUE, Ye**
**Hong Kong 999077 (CN)**
• **SU, Liqun**
**Hong Kong 999077 (CN)**
• **LAU, Kin Nang**
**Hong Kong 999077
(CN)**

(74) Representative: **Gill Jennings & Every LLP**
**The Broadgate Tower**
**20 Primrose Street**
**London EC2A 2ES (GB)**

(54) **INFORMATION PROCESSING METHOD AND COMMUNICATION APPARATUS**

(57)    This application provides an information processing method and a communication apparatus. The method includes: A participating node performs a $t^{th}$ time of model training to obtain first gradient information, and then determines first compression kernel information based on gradient information obtained through all past model training. The all past model training includes the $t^{th}$ time of model training and at least one time of model training before the $t^{th}$ time of model training, and the gradient information obtained through all the past model training includes the first gradient information. The participating node sends the first compression kernel information to a central node, and then receives first information from the central node. The first information indicates first global compression kernel information, and the first global compression kernel information is used for compressing gradient information obtained through model training. A compression rate of the gradient information can be improved, and transmission efficiency of the gradient information can be improved.

200

| Perform a $t^{th}$ time of model training to obtain first gradient information | S201 |
| Determine first compression kernel information based on gradient information obtained through all past model training | S202 |
| Send the first compression kernel information to a central node | S203 |
| Receive first information from the central node, where the first information indicates first global compression kernel information, and the first global compression kernel information is used for compressing gradient information obtained through model training | S204 |

FIG. 2

## Description

This application claims priority to Chinese Patent Application No. 202210303188.1, filed with the China National Intellectual Property Administration on March 25, 2022 and entitled "INFORMATION PROCESSING METHOD AND COMMUNICATION APPARATUS", which is incorporated herein by reference in its entirety.

## TECHNICAL FIELD

This application relates to the communication field, and more specifically, to an information processing method and a communication apparatus.

## BACKGROUND

Artificial intelligence (artificial intelligence, AI) is a very important application in a future wireless communication network (for example, an internet of things). Federated learning (federated learning, FL) is a distributed intelligent model training method. A central node provides a model parameter of an intelligent model for a plurality of participating nodes of the federated learning. The plurality of participating nodes separately perform intelligent model training based on respective datasets and then feed back gradient information of a loss function to the central node. The central node updates the model parameter based on the gradient information fed back by the plurality of participating nodes. In this way, problems of time consumption and communication overheads caused by data collection during centralized model training can be resolved. In addition, because training data does not need to be transmitted, privacy security problems can also be reduced.

To reduce transmission overheads of a gradient vector of a loss function in the federated learning, gradient information needs to be compressed and then transmitted, to reduce communication costs. Gradient sparsification is a compression method in which only an element that is in a gradient vector and that exceeds a specific threshold is sent. However, because only some elements in the gradient vector are selected during the gradient sparsification, a gradient vector obtained through each time of training cannot be completely transmitted. Consequently, inference performance of an intelligent model finally obtained through training is low. Currently, there is a lack of an effective gradient compression mechanism.

## SUMMARY

This application provides an information processing method and a communication apparatus, to improve a compression rate of gradient information and improve transmission efficiency of the gradient information.

According to a first aspect, an information processing method is provided. The method includes: performing a $t^{th}$ time of model training to obtain first gradient information, where t is an integer greater than 1; determining first compression kernel information based on gradient information obtained through all past model training, where all the past model training includes the $t^{th}$ time of model training and at least one time of model training before the $t^{th}$ time of model training, and the gradient information obtained through all the past model training includes the first gradient information; sending the first compression kernel information to a central node; and then receiving first information from the central node, where the first information indicates first global compression kernel information, and the first global compression kernel information is used for compressing gradient information obtained through model training.

According to the foregoing solution, based on a correlation between the gradient information obtained through the model training, during the model training, a participating node dynamically tracks and learns compression kernel information based on the gradient information obtained through the model training, and feeds back the compression kernel information to the central node, so that the central node obtains global compression kernel information based on compression kernel information provided by a plurality of participating nodes, and notifies the participating node of the global compression kernel information; and the participating node compresses the gradient information based on the global compression kernel information. Therefore, adverse impact of information compression on a training result can be reduced, to improve a compression rate of the gradient information, and improve transmission efficiency of the gradient information.

With reference to the first aspect, in some implementations of the first aspect, the determining first compression kernel information based on gradient information obtained through all past model training includes: determining first center vector information based on the first gradient information and second center vector information, where the first center vector information is used for representing a mean vector of the gradient information obtained through all the past model training, the first compression kernel information includes the first center vector information, and the second center vector information is center vector information determined through a $(t-1)^{th}$ time of model training.

According to the foregoing solution, the participating node determines, based on the gradient information obtained through the $t^{th}$ time of model training and the second center vector information determined through the $(t-1)^{th}$ time of model training, center vector information (that is, the first center vector information) obtained through the $t^{th}$ time of model training. In this way, iterative calculation after each time of model training that is performed based on all gradient information obtained through all past model training after each time of model training can be avoided, storage overheads can be reduced, and information processing efficiency can be improved.

With reference to the first aspect, in some implementations of the first aspect, the determining first compression kernel information based on gradient information obtained through all past model training further includes: obtaining covariance matrix information of a deviation between the first gradient information and the first center vector information; determining first covariance mean matrix information based on the covariance matrix information and second covariance mean matrix information, where the first covariance mean matrix information is used for representing a mean matrix of covariance matrix information of a deviation obtained through all the past model training, and the second covariance mean information is covariance mean matrix information determined through the $(t-1)^{th}$ time of model training; and obtaining first principal component matrix information of the first covariance mean matrix information, where the first principal component matrix information is used for representing eigenvectors corresponding to M eigenvalues of the first covariance mean matrix information, the first compression kernel information includes the first principal component matrix information, and M is an integer greater than 1.

According to the foregoing solution, the participating node determines, based on the gradient information obtained through the $t^{th}$ time of model training and covariance mean matrix information obtained through a previous time of model training, covariance mean matrix information obtained through a current time of model training. In this way, iterative calculation after each time of model training that is performed based on all gradient information obtained through all past model training after each time of model training can be avoided, storage overheads can be reduced, and information processing efficiency can be improved.

With reference to the first aspect, in some implementations of the first aspect, the method further includes: compressing second gradient information based on the first global compression kernel information, to obtain second compressed gradient information, where the second gradient information is gradient information obtained through a $(t+i)^{th}$ time of model training, and i is a positive integer; and sending the second compressed gradient information.

With reference to the first aspect, in some implementations of the first aspect, the first global compression kernel information includes global center vector information and global principal component matrix information; and the compressing second gradient information based on the first global compression kernel information, to obtain second compressed gradient information includes: obtaining the second compressed gradient information based on the global principal component matrix information and a deviation between the second gradient information and the global center vector information.

According to the foregoing solution, the gradient information obtained through the model training is compressed through PCA based on first global compressed gradient information. Therefore, adverse impact of information compression on a training result can be reduced, to improve a compression rate of the gradient information, and improve transmission efficiency of the gradient information.

With reference to the first aspect, in some implementations of the first aspect, before the receiving first information from the central node, the method further includes: compressing the first gradient information based on second global compression kernel information, to obtain first compressed gradient information, where the second global compression kernel information is obtained from the central node.

With reference to the first aspect, in some implementations of the first aspect, the sending the first compression kernel information to a central node includes: sending the first compression kernel information to the central node on a first resource.

With reference to the first aspect, in some implementations of the first aspect, the sending the first compression kernel information to a central node includes: when $t/T_1$ is an integer, sending the first compression kernel information to the central node, where $T_1$ is an integer greater than 1.

According to the foregoing solution, the participating node updates the first compression kernel information after each time of model training, and sends compression kernel information updated most recently to the central node after updating the compression kernel information every $T_1$ times. In this way, transmission overheads caused by sending the compression kernel information to the central node after each time of updating the compression kernel information can be reduced.

According to a second aspect, an information processing method is provided. The method includes: first, receiving first compression kernel information from a plurality of participating nodes, to obtain first global compression kernel information; then, sending first information, where the first information indicates the first global compression kernel information, and the first global compression kernel information is used for compressing gradient information obtained through model training.

With reference to the second aspect, in some implementations of the second aspect, the receiving first compression kernel information from a plurality of participating nodes, to obtain first global compression kernel information includes: receiving the first compression kernel information from the plurality of participating nodes on a first resource, to obtain aggregated compression kernel information, where the aggregated compression kernel information is compression kernel information obtained by superposing the first compression kernel information of the plurality of participating nodes on the first resource; and obtaining the first global compression kernel information based on the aggregated compression kernel information.

With reference to the second aspect, in some implementations of the second aspect, the method further includes: receiving compressed gradient information from the plurality of participating nodes; obtaining compressed gradient mean information based on the compressed gradient information of the plurality of parameter nodes, where the compressed gradient mean information is used for representing a mean vector of the compressed gradient information of the plurality of parameter nodes; then, decompressing the compressed gradient mean information based on the first global compression kernel information, to obtain decompressed gradient mean information; and finally, updating a model parameter of an intelligent model based on the gradient mean information.

With reference to the second aspect, in some implementations of the second aspect, the first compression kernel information includes first center vector information. The first global compression kernel information includes global center vector information. The global center vector information is used for representing a mean vector of the first center vector information of the plurality of participating nodes. The first compression kernel information includes first principal component matrix information. The first global compression kernel information includes global principal component matrix information. The global principal component matrix information is used for representing $M$ global principal eigenvectors. $M$ is an integer greater than 1.

With reference to the second aspect, in some implementations of the second aspect, the decompressing the compressed gradient mean information based on the first global compression kernel information, to obtain decompressed gradient mean information includes: decompressing the compressed gradient mean information based on the global center vector information and the global principal component matrix information, to obtain compressed gradient mean information.

According to a third aspect, a communication apparatus is provided. The communication apparatus includes: a processing unit, configured to perform a $t^{th}$ time of model training to obtain first gradient information, where $t$ is an integer greater than 1, where the processing unit is further configured to determine first compression kernel information based on gradient information obtained through all past model training, where all the past model training includes the $t^{th}$ time of model training and at least one time of model training before the $t^{th}$ time of model training, and the gradient information obtained through all the past model training includes the first gradient information; and a transceiver unit, configured to send the first compression kernel information to a central node, where the transceiver unit is further configured to receive first information from the central node, the first information indicates first global compression kernel information, and the first global compression kernel information is used for compressing gradient information obtained through model training.

With reference to the third aspect, in some implementations of the third aspect, the processing unit is specifically configured to determine first center vector information based on the first gradient information and second center vector information, where the first center vector information is used for representing a mean vector of the gradient information obtained through all the past model training, the first compression kernel information includes the first center vector information, and the second center vector information is center vector information determined through a $(t-1)^{th}$ time of model training.

With reference to the third aspect, in some implementations of the third aspect, the processing unit is specifically configured to: obtain covariance matrix information of a deviation between the first gradient information and the first center vector information; determine first covariance mean matrix information based on the covariance matrix information and second covariance mean matrix information, where the first covariance mean matrix information is used for representing a mean matrix of covariance matrix information of a deviation obtained through all the past model training, and the second covariance mean information is covariance mean matrix information determined through the $(t-1)^{th}$ time of model training; and then obtain first principal component matrix information of the first covariance mean matrix information, where the first principal component matrix information is used for representing eigenvectors corresponding to $M$ eigenvalues of the first covariance mean matrix information, the first compression kernel information includes the first principal component matrix information, and $M$ is an integer greater than 1.

With reference to the third aspect, in some implementations of the third aspect, the processing unit is further configured to compress second gradient information based on the first global compression kernel information, to obtain second compressed gradient information, where the second gradient information is gradient information obtained through a $(t+i)^{th}$ time of model training, and $i$ is a positive integer. The transceiver unit is further configured to send the second compressed gradient information.

With reference to the third aspect, in some implementations of the third aspect, the first global compression kernel information includes global center vector information and global principal component matrix information. The processing unit is further configured to obtain the second compressed gradient information based on the global principal component matrix information and a deviation between the second gradient information and the global center vector information.

With reference to the third aspect, in some implementations of the third aspect, the processing unit is further configured to: before receiving the first information from the central node, compress the first gradient information based on second global compression kernel information, to obtain first compressed gradient information, where the second global compression kernel information is obtained from the central node.

With reference to the third aspect, in some implementations of the third aspect, the transceiver unit is specifically configured to send the first compression kernel information to the central node on a first resource.

With reference to the third aspect, in some implementations of the third aspect, the transceiver unit is specifically configured to: when $t/T_1$ is an integer, send the first compression kernel information to the central node, where $T_1$ is an integer greater than 1.

According to a fourth aspect, a communication apparatus is provided. The communication apparatus includes: a processing unit, configured to obtain first global compression kernel information based on received first compression kernel information from a plurality of participating nodes; and a transceiver unit, further configured to send first information, where the first information indicates the first global compression kernel information, and the first global compression kernel information is used for compressing gradient information obtained through model training.

With reference to the fourth aspect, in some implementations of the fourth aspect, the transceiver unit is further configured to receive the first compression kernel information from the plurality of participating nodes on a first resource, to obtain aggregated compression kernel information, where the aggregated compression kernel information is compression kernel information obtained by superposing the first compression kernel information of the plurality of participating nodes on the first resource. The processing unit is specifically configured to obtain the first global compression kernel information based on the aggregated compression kernel information.

With reference to the fourth aspect, in some implementations of the fourth aspect, the transceiver unit is further configured to receive compressed gradient information from a plurality of participating nodes; and the processing unit is further configured to obtain compressed gradient mean information based on the compressed gradient information of the plurality of parameter nodes, where the compressed gradient mean information is used for representing a mean vector of the compressed gradient information of the plurality of parameter nodes. In addition, the processing unit is further configured to decompress the compressed gradient mean information based on the first global compression kernel information, to obtain decompressed gradient mean information, and then update a model parameter of an intelligent model based on the gradient mean information.

With reference to the fourth aspect, in some implementations of the fourth aspect, the first compression kernel information includes first center vector information. The first global compression kernel information includes global center vector information. The global center vector information is used for representing a mean vector of the first center vector information of the plurality of participating nodes. The first compression kernel information includes first principal component matrix information. The first global compression kernel information includes global principal component matrix information. The global principal component matrix information is used for representing M global principal eigenvectors. M is an integer greater than 1.

With reference to the fourth aspect, in some implementations of the fourth aspect, the processing unit is specifically configured to decompress the compressed gradient mean information based on the global center vector information and the global principal component matrix information, to obtain compressed gradient mean information.

According to a fifth aspect, a communication apparatus is provided. The communication apparatus includes a processor. The processor may implement the method in any one of the first aspect and possible implementations of the first aspect, or implement the method in any one of the second aspect and possible implementations of the second aspect.

Optionally, the communication apparatus further includes a memory. The processor is coupled to the memory, and may be configured to execute an instruction stored in the memory, to implement the method in any one of the first aspect and the possible implementations of the first aspect, or implement the method in any one of the second aspect and the possible implementations of the second aspect.

Optionally, the communication apparatus further includes a communication interface. The processor is coupled to the communication interface. In embodiments of this application, the communication interface may be a transceiver, a pin, a circuit, a bus, a module, or another type of communication interface. This is not limited in this application.

In an implementation, the communication apparatus is a communication device. When the communication apparatus is the communication device, the communication interface may be a transceiver or an input/output interface.

In another implementation, the communication apparatus is a chip configured in a communication device. When the communication apparatus is a chip configured in a communication device, the communication interface may be an input/output interface, and the processor may be a logic circuit.

Optionally, the transceiver may be a transceiver circuit. Optionally, the input/output interface may be an input/output circuit.

According to a sixth aspect, a processor is provided. The processor includes an input circuit, an output circuit, and a processing circuit. The processing circuit is configured to receive a signal by using the input circuit, and transmit a signal by using the output circuit, to enable the processor to perform the method in any one of the first aspect and the possible implementations of the first aspect.

In a specific implementation process, the processor may be one or more chips. The input circuit may be an input pin. The output circuit may be an output pin. The processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or an instruction). A computer is enabled, when the computer program is run, to perform the method in any one of the first aspect and the possible implementations of the first aspect, or perform the method in any one of the second aspect and the possible implementations of the second aspect.

According to an eighth aspect, a computer-readable storage medium is provided. The computer-readable storage medium stores a computer program (which may also be referred to as code or an instruction). A computer is enabled, when the computer program is run on the computer, to perform the method in any one of the first aspect and the possible implementations of the first aspect, implement the method in any one of the second aspect and the possible implementations of the second aspect, or implement the method in any one of the third aspect and the possible implementations of the third aspect.

According to a ninth aspect, a communication system is provided. The communication system includes the plurality of participating nodes and at least one central node.

For technical effects that may be achieved by any one of the second aspect to the ninth aspect and any possible implementations of any one of the second aspect to the tenth aspect, refer to descriptions of technical effects that may be achieved by the first aspect and corresponding implementations of the first aspect. Details are not described herein again.

## BRIEF DESCRIPTION OF DRAWINGS

FIG. 1 is a diagram of a communication system to which an embodiment of this application is applicable;
FIG. 2 is a schematic flowchart of an information processing method according to an embodiment of this application;
FIG. 3 is another schematic flowchart of an information processing method according to an embodiment of this application;
FIG. 4 is a schematic block diagram of an example of a communication apparatus according to this application; and
FIG. 5 is a schematic structural diagram of another example of a communication apparatus according to this application.

## DESCRIPTION OF EMBODIMENTS

In embodiments of this application, "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, terms such as "first" and "second" may be used to distinguish technical features with a same or similar function. The terms such as "first" and "second" do not limit a quantity or an execution sequence, and the terms such as "first" and "second" do not limit a definite difference. In embodiments of this application, the word such as "example" or "for example" is used to represent an example, evidence, or a description. Any embodiment or design solution described as "example" or "for example" should not be explained as being more preferred or having more advantages than another embodiment or design solution. A term such as "example" or "for example" is used to present a related concept in a specific manner for ease of understanding.

In embodiments of this application, "at least one (type)" may alternatively be described as "one (type) or more (types)", and "a plurality of (types)" may be two (types), three (types), four (types), or more (types). This is not limited in this application.

The following describes technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) communication system, a future communication system (for example, a 6th generation (6th generation, 6G) communication system), a wireless fidelity (wireless fidelity, Wi-Fi) system, an ultra wide band (ultra wide band, UWB) system, or a system integrating a plurality of communication systems. This is not limited in embodiments of this application. 5G may also be referred to as new radio (new radio, NR).

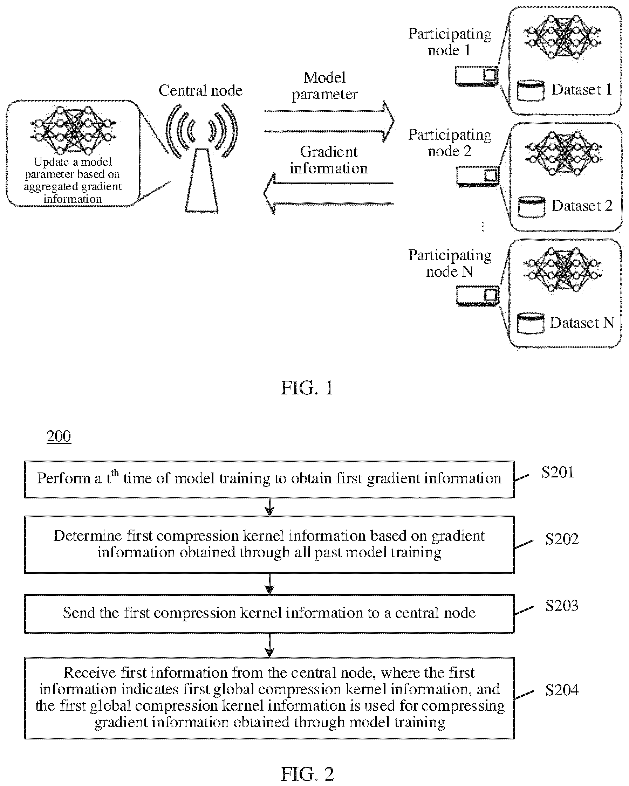

FIG. 1 is a diagram of a communication system to which an embodiment of this application is applicable.

As shown in FIG. 1, the communication system to which this embodiment of this application is applicable may include at least one central node and at least one participating node such as participating nodes 1, 2, and N shown in FIG. 1. The central node may provide a model parameter for each participating node. After updating a model based on the model parameter provided by the central node, each participating node trains an updated model by using a local dataset. For example, the participating node 1 trains the model by using a local dataset 1, the participating node 2 trains the model by using a local dataset 2, and the participating node N trains the model by using a local dataset N. After performing model training, a plurality of participating nodes each send, to the central node, gradient information of a loss function obtained through a current time of training. The central node determines aggregated gradient information of the gradient information from the plurality of participating nodes, determines an updated model parameter based on the aggregated gradient information, and notifies each participating node of the updated model parameter, so that each participating node performs a next time of model training. The participating node may compress the gradient information by using an information processing method provided in this application, and then send compressed gradient information to the central node. The central node may decompress the received compressed gradient information by using the information processing method provided in this application.

The central node provided in embodiments of this application may be a network device, for example, a server, a base station, or an access point (access point, AP) in a Wi-Fi system. The central node may be a device that is deployed in a radio access network and that can directly or indirectly communicate with the participating node.

The participating node provided in this embodiment of this application may be a device having a transceiver function, for example, a terminal or a terminal device. For example, the participating node may be a sensor or a device having a data collection function. The participating node may be deployed on land, including an indoor scenario, an outdoor scenario, a handheld scenario, and/or a vehicle-mounted scenario, or deployed on a water surface (for example, on a ship). Alternatively, the participating node may be deployed in the air (for example, on an airplane, a balloon, or a satellite). The participating node may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), and/or the like.

The technical solutions provided in embodiments of this application may be applied to a plurality of scenarios, for example, intelligent retail, a smart home, video surveillance (video surveillance), an internet of vehicles (such as autonomous driving and self-driving), and an industrial wireless sensor network (industrial wireless sens or network, IWSN). However, this application is not limited thereto.

In an implementation, the technical solutions provided in this application may be applied to the smart home, to provide a personalized service for a customer based on a customer requirement. The central node may be a base station or a server. The participating node may be a client device disposed in each home. Based on the technical solution provided in this application, the client device provides, for the server through a router, only synthetic gradient information obtained through model training based on local data, so that training result information can be shared with the server while customer data privacy is protected. The server obtains aggregated gradient information of synthetic gradient information provided by a plurality of client devices, determines an updated model parameter, and notifies each client device of the updated model parameter, to continue training of an intelligent model. After completing the model training, the client device uses a trained model to provide a personalized service for the customer.

In another implementation, the technical solutions provided in this application may be applied to the industrial wireless sensor network, to implement industrial intelligence. The central node may be a server, and the participating nodes may be a plurality of sensors (for example, a mobile intelligent robot) in a factory. After performing model training based on local data, the sensors send synthetic gradient information to the server, and the server obtains aggregated gradient information based on the synthetic gradient information provided by the sensors, determines an updated model parameter, and notifies each sensor of the updated model parameter, to continue training of an intelligent model. After completing the model training, the sensor in which a trained model is used executes a factory task. For example, the sensor is a mobile intelligent robot, and a moving route may be obtained based on the trained model to complete a factory transportation task, an express sorting task, and the like.

To better understand embodiments of this application, terms used in this specification are briefly described below.

1. Artificial intelligence AI

The artificial intelligence AI enables a machine to have a learning ability and accumulate experience, so that problems such as natural language understanding, image recognition, and/or chess playing that may be resolved by humans through experience can be resolved.

2. Training (training) or learning

The training is a process of processing a model (also referred to as a training model). In the processing process, parameters such as weighted values in the model are optimized, so that the model learns to execute a specific task. Embodiments of this application are applicable to but are not limited to one or more of the following training methods: supervised learning, unsupervised learning, reinforcement learning, transfer learning, and the like. The supervised learning uses a set of training samples that have been correctly labeled to perform training. "Have been correctly labeled" means that each sample has an expected output value. Different from the supervised learning, the unsupervised learning is a method in which input data is automatically classified or grouped without giving a pre-marked training sample.

3. Inference

The inference refers to performing data processing by using a trained model (where the trained model may be referred to as an inference model). Actual data is input into the inference model for processing, to obtain a corresponding inference result. The inference may also be referred to as prediction or decision-making, and the inference result may also be referred to as a prediction result, a decision-making result, or the like.

4. Federated learning (federated learning)

The federated learning is a distributed AI training method in which a training process of an AI algorithm is performed on a plurality of devices instead of being aggregated to one server, so that problems of time consumption and high communication overheads caused by data collection during centralized AI training can be resolved. In addition, because device data does not need to be sent to the server, privacy security problems can also be reduced. A federated learning process may include but is not limited to the following: A central node sends a model parameter of an AI model to a plurality of participating nodes, and the participating nodes perform AI model training based on local data of the participating nodes, obtains gradient information of a loss function after the model training, and sends the gradient information to the central node. The central node updates the parameter of the AI model based on gradient information fed back by the plurality of participating nodes for gradient information fed back by the plurality of participating nodes. The central node may send an updated parameter of the AI model to the plurality of participating nodes, and the participating nodes perform training on the AI model again. In different federated learning processes, participating nodes selected by the central node may be the same or may be different. This is not limited in this application.

In the federated learning, the participating node feeds back the gradient information with high overheads, so that the gradient information needs to be compressed and then transmitted to reduce communication costs. However, a current compression manner is not suitable for the federated learning such as gradient sparsification. Because only some elements in a gradient vector are selected during the gradient sparsification, a deviation of a training result is caused.

Principal component analysis (principal component analysis, PCA) is a statistical method. A group of correlated variables is transformed into a group of linearly uncorrelated variables through orthogonal transformation, and a transformed group of variables is referred to as a principal component. Specifically, for a set of data $D = \{d_l\}_{l=1}^{L}$ with a potential correlation, each high-dimensional data point $d_l \in R^N$ in a dataset whose dimension is $N$ is projected to $M$ principal components (principal components, PCs) through the PCA, to obtain a low-dimensional representation in $R^M$ ($M \ll N$). Most important subspace in the data is captured through the PCA. $R^x$ represents a real number vector set whose dimension is $x$. Conventional PCA is usually implemented through singular value decomposition (singular value decomposition, SVD) of data samples. Specifically, the PCA requires that a sample mean $\mu$ of sample data in the dataset and the first $M$ eigenvectors U of a covariance matrix constructed by using data D be calculated. Therefore, for given data points $d_l \in R^N$ in dataset D, data may be effectively compressed by $s_l = U^T(d_l - \mu) \in R^M$ ($M \ll N$), and may be decompressed by $\hat{d}_t = U s_l + \mu \in R^N$.

In the federated learning, gradient information obtained through model training performed by each participating node is tightly correlated. This application proposes that the participating node may dynamically track and learn compression kernel information based on the gradient information obtained through model training, and feed back the compression kernel information to the central node, so that the central node may obtain global compression kernel information based on compression kernel information provided by the plurality of participating nodes, and notify the participating node of the global compression kernel information; and the participating node compresses the gradient information through the PCA based on the global compression kernel information. In this way, a compression rate of the gradient information is improved, complete gradient information can be compressed, adverse impact of information compression on a training result is reduced, and transmission efficiency of the gradient information is improved.

The following describes, with reference to the accompanying drawings, an intelligent model training method provided in embodiments of this application.

FIG. 2 is a schematic flowchart of an information processing method according to an embodiment of this application. A central node and a plurality of participating nodes jointly perform intelligent model training. The information processing method shown in FIG. 2 is performed by one participating node k in the plurality of participating nodes.

S201. The participating node performs a $t^{th}$ time of model training to obtain first gradient information.

t is an integer greater than 1. The participating node $k$ updates an intelligent model based on a model weight that is of the intelligent model and that is updated most recently by the central node, and performs a $t^{th}$ time of model training on an updated intelligent model, to obtain first gradient information.

In an implementation, the first gradient information is gradient information $g_k^t$ of a loss function obtained through the $t^{th}$ time of model training, where $g_k^t \in R^{N_\theta}$, $\theta$ is a target model parameter of federated learning, and $\theta$ is a real number vector.

In another implementation, the first gradient information includes gradient information $g_k^t$ of a loss function obtained through the $t^{th}$ time of model training and residual gradient information that is not sent by the participating node $k$ to the central node before the $t^{th}$ time of model training. The first gradient information $\tilde{g}_k^t$ may be expressed as follows:

$$\tilde{g}_k^t = g_k^t + \alpha^t r_k^t.$$

rk is the residual gradient information that is not sent by the participating node to the central node before the $t^{th}$ time of model training. $\alpha^t = \frac{\eta^{t-1}}{\eta^t}$ is a combination weight, and $\eta^t$ is a learning rate of the $t^{th}$ time of model training. Because compression processing causes a loss of gradient information fed back by the participating node $k$ to the central node, and affects a training convergence speed of the federated learning, this application proposes a manner in which feedback gradient information may include the residual gradient information that is not fed back to the central node before the $t^{th}$ time of model training, so that the training convergence speed of the federated learning can be increased.

It should be noted that the following uses an example in which the first gradient information is $\tilde{g}_k^t$ to describe the information processing method provided in this application. It should be understood that this application is not limited thereto. The first gradient information may be gradient information to be compressed after the participating node $k$ performs the $t^{th}$ time of model training. For example, the first gradient information may alternatively be $g_k^t$. When the first gradient information is $g_k^t$, $\tilde{g}_k^t$ described below may be replaced with $g_k^t$ in a specific implementation. For brevity, details are not described herein again.

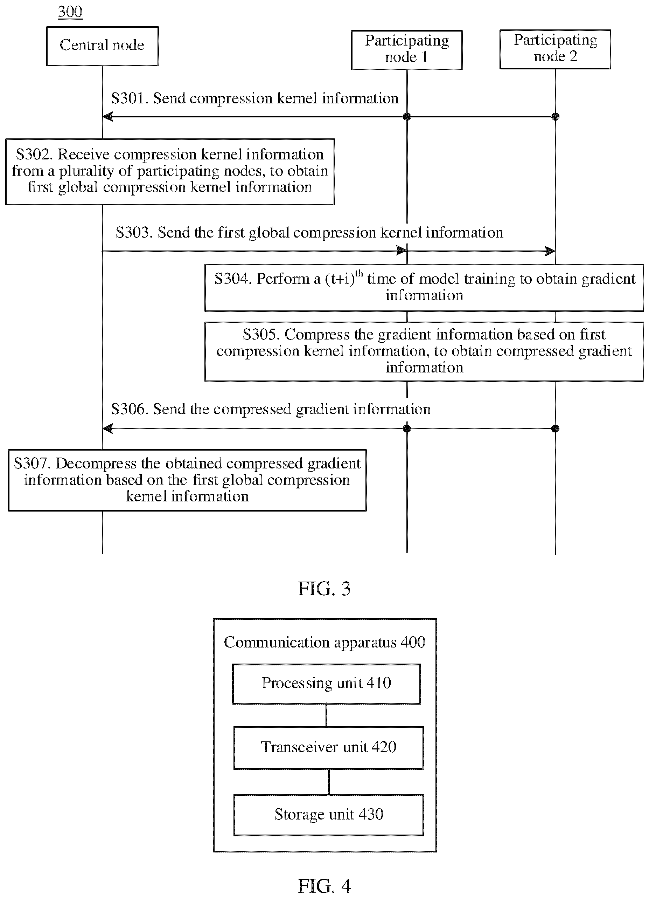

After obtaining the first gradient information, the participating node k compresses the first gradient information based on global compression kernel information (denoted as second global compression kernel information) updated most recently (for example, for an $l^{th}$ time) by the central node, to obtain first compressed gradient information. The second global compression kernel information is sent by the central node to the participating node. The participating node provides compression kernel information for the central node by using the information processing method provided in the embodiment shown in FIG. 2. The central node may update global compression kernel information based on obtained compression kernel information from the plurality of participating nodes, and send updated global compression kernel information to the participating node, for the participating node to compress gradient information participating node. For a specific manner in which the central node obtains the global compression kernel information, refer to the following descriptions of an embodiment shown in FIG. 3.

Optionally, the second global compression kernel information includes second global center vector information $\mu^l$ and second global principal component matrix information, and the second global principal component matrix information is used for representing $M_\theta$ global principal eigenvectors. The participating node $k$ may obtain the first compressed gradient information based on the second global principal component matrix information $U^l$ and a deviation between the first gradient information and the second global center vector information $\mu^l$.

For example, the participating node $k$ may project the deviation ( $\tilde{g}_k^t - \mu^l$ ) between the first gradient information $\tilde{g}_k^t$ and the second global center vector information $\mu^l$ to $(U^l)^T$, to obtain the first compressed gradient information $s_k^t$, where $\mu^l \in R^{N_\theta}$, $U^l \in R^{N_\theta \times M_\theta}$, and $s_k^t \in R^{M_\theta}$, that is,

$$s_k^t = (U^l)^T (\tilde{g}_k^t - \mu^l).$$

$(x)^T$ represents a transposition of $x$. $R^{x \times y}$ represents a real number matrix set whose dimension is $x \times y$.

After the participating node $k$ obtains the first compressed gradient information, the participating node $k$ may send the first compressed gradient information to the central node. Specifically, the participating node $k$ may obtain a transmission parameter $p_k^t$ and transmit $s_k^t$ by using the transmission parameter $p_k^t$. The participating node $k$ sends, to the central node, the first compressed gradient information weighted by using the transmission parameter, that is, $p_k^t s_k^t$.

In an implementation, the participating node $k$ may determine the transmission parameter $p_k^t$ based on a transmit power gain $\rho$, and channel fading $h_k^t$ that is between the participating node $k$ and the central node and that corresponds to the $t^{th}$ time of model training, where $\rho \in R$. For example, $p_k^t$ satisfies the following:

$$p_k^t = \frac{\sqrt{\rho}}{h_k^t}.$$

In another implementation, the participating node may determine a value of the transmission parameter $p_k^t$ based on a relationship between a truncation threshold $\gamma$ and channel fading $h_k^t$, to determine whether to send the weighted first compressed gradient information to the central node. $\gamma \in R$. For example, $p_k^t$ satisfies the following:

$$p_k^t = \begin{cases} \frac{\sqrt{\rho}}{h_k^t}, & |h_k^t| > \gamma \\ 0, & |h_k^t| \leq \gamma \end{cases}.$$

When $|h_k^t| > \gamma$, the transmission parameter is $\frac{\sqrt{\rho}}{h_k^t}$, and the participating node $k$ sends, to the central node, the first compressed gradient information weighted by using the transmission parameter, that is, $\frac{\sqrt{\rho}}{h_k^t} s_k^t$; otherwise, when $|h_k^t| \leq \gamma$, the transmission parameter is 0, and the participating node k does not send the first compressed gradient information to the central node.

In other words, in this implementation, the participating node $k$ may determine, based on a channel condition, whether to send the first compressed gradient information to the central node. When the channel condition does not satisfy the truncation threshold, the participating node $k$ does not send the first gradient information to the central node, so that a probability that gradient information is incorrectly transmitted or fails to be transmitted due to a poor channel condition can be reduced, and power consumption of the participating node can be reduced. The participating node $k$ updates residual gradient information $r_k^{t+1}$, where $r_k^{t+1}$ is residual gradient information that is not sent to the central node before a $(t+1)^{th}$ time of model training.

$$r_k^{t+1} = \tilde{g}_k^t - \left( U^l \left( s_k^t * \mathbb{I}_{(|h_k^t|>\gamma)} \right) + \mu^l \right).$$

$\mathbb{I}_{(A)}$ represents an indicator function (indicator function) for an event A, and a value of $\mathbb{I}_{(A)}$ is 1 when the event A occurs, or a value of $\mathbb{I}_{(A)}$ is 0 when the event A does not occur.

To be specific, when $|h_k^t| > \gamma$, if $p_k^t \neq 0$, and $\mathbb{I}_{(|h_k^t|>\gamma)} = 1$, the participating node $k$ sends the weighted first compressed gradient information to the central node, and

$$r_k^{t+1} = \tilde{g}_k^t - (U^l s_k^t + \mu^l).$$

When $h_k^t$ does not satisfy $|h_k^t| > \gamma$, if $p_k^t = 0$, and $\mathbb{I}_{(|h_k^t|>\gamma)} = 0$, the participating node $k$ does not send the first compressed gradient information to the central node, where $r_k^{t+1}$ is a deviation between the first gradient information $\tilde{g}_k^t$ and the second global center vector information $\mu^l$, that is, $r_k^{t+1}$ satisfies the following:

$$r_k^{t+1} = \tilde{g}_k^t - \mu^l.$$

The central node may obtain the first compressed gradient information sent by the plurality of participating nodes after the t$^{th}$ time of model training, and decompress the information based on the second global center vector information $\mu^l$ and the second global principal component matrix information $U^l$ in the second global compression kernel information, to obtain gradient mean information. Then, the central node determines a model parameter $\theta^t$ of the intelligent model based on the gradient mean information. The central node sends an updated model parameter $\theta^t$ to K participating nodes. After updating the model parameter of the intelligent model based on $\theta^t$, the K participating nodes perform $t+1$ times of model training on the intelligent model with an updated model parameter.

For a specific manner in which the central node receives the compressed gradient information sent by the participating node after the t$^{th}$ time of model training and decompresses the information based on the second global compression kernel information, to obtain compression mean information, refer to an implementation in S307 in the embodiment shown in FIG. 3 in which the central node receives compressed gradient information sent by the participating node after a (t+i)$^{th}$ time of model training and decompresses the information based on first global compression kernel information, to obtain compression mean information. For example, $t+i$ in each expression in S307 is replaced with t, and $l$ +1 is replaced with $l$. For brevity, details are not described herein.

After the t$^{th}$ time of model training, the participating node $k$ updates the compression kernel information based on the first gradient information in S202 in addition to compressing the first gradient information and then sending the first gradient information to the central node in the foregoing descriptions.

S202. The participating node determines first compression kernel information based on gradient information obtained through all past model training.

All the past model training includes the t$^{th}$ time of model training and at least one time of model training before the t$^{th}$ time of model training. A solution provided in this application is described below by using an example in which all the past model training includes the t$^{th}$ time of model training and a (t-1)$^{th}$ time of model training before the t$^{th}$ time of model training, and there are a total of t times of model training. It should be understood that this application is not limited thereto. Based on the following descriptions, in a specific implementation, the participating node selects gradient information obtained through the t$^{th}$ time of model training and the at least one time of model training before the t$^{th}$ time of model training to determine compression kernel information.

The first compression kernel information may include first center vector information and/or first principal component matrix information.

Optionally, the first compression kernel information may include the first center vector information. The first center vector information is used for representing a mean vector that includes the gradient information obtained through all the past model training.

After the t$^{th}$ time of model training, the participating node $k$ obtains, based on t pieces of gradient information obtained through the first t times of model training, a mean value of the t pieces of gradient information, that is, the first center vector information.

In an implementation, the participating node *k* may obtain the first center vector information $\mu_k^t$ based on the t pieces of gradient information obtained through the t times of model training. For example, the first center vector information $\mu_k^t$ satisfies the following formula:

$$\mu_k^t = \frac{1}{t}\sum_{i=1}^{t} \tilde{g}_k^i.$$

In another implementation, the participating node *k* determines the first center vector information based on the first gradient information and second center vector information. The second center vector information is center vector information determined through the (t-1)$^{th}$ time of model training.

For example, the participating node k may obtain, based on the first gradient information $\tilde{g}_k^t$ obtained through the t$^{th}$ time of model training and the second center vector information $\mu_k^{t-1}$ determined through the (t-1)$^{th}$ time of model training, the first center vector information $\mu_k^t$ by using the following formula, where $\mu_k^t \in R^{N_\theta}$:

$$\mu_k^t = \left(1 - \frac{1}{t}\right)\mu_k^{t-1} + \frac{1}{t}\tilde{g}_k^t.$$

In this application, after the participating node k performs a first time of model training, center vector information $\mu_k^1$ is gradient information $\tilde{g}_k^1$ obtained through the first time of model training.

In this implementation, the participating node *k* determines, based on the gradient information obtained through the t$^{th}$ time of model training and the second center vector information determined through the (t-1)$^{th}$ time of model training, center vector information (that is, the first center vector information) obtained through the t$^{th}$ time of model training. In this way, iterative calculation after each time of model training that is performed based on all gradient information obtained through all past model training after each time of model training can be avoided, storage overheads can be reduced, and information processing efficiency can be improved.

Optionally, the first compression kernel information includes first principal component matrix information of first covariance mean matrix information. The first covariance mean matrix information is used for representing a mean matrix of a covariance matrix of a deviation between gradient information and center vector information that are obtained through all the past model training.

After the t$^{th}$ time of model training, the participating node *k* obtains first covariance mean matrix information based on the t pieces of gradient information obtained through the first t times of model training.

In an implementation, the participating node *k* may obtain the first covariance mean matrix information Vk based on the t pieces of gradient information obtained through the t times of model training. Vk satisfies the following formula:

$$V_k^t = \frac{1}{t}\sum_{i=1}^{t} \sigma_k^i = \frac{1}{t}\sum_{i=1}^{t}(\mu_k^i - \tilde{g}_k^i)(\mu_k^i - \tilde{g}_k^i)^T.$$

In another implementation, the participating node *k* obtains second covariance mean matrix information and a deviation between the first gradient information and the first center vector information, and determines the first covariance mean matrix information. The second covariance mean matrix information is covariance mean matrix information obtained through the (t-1)$^{th}$ time of model training.

For example, the participating node *k* obtains the covariance matrix information $\sigma_k^t$ of the deviation between the first gradient information $\tilde{g}_k^t$ and the first center vector information $\mu_k^t$. $\sigma_k^t$ satisfies the following formula:

$$\sigma_k^t = (\mu_k^t - \tilde{g}_k^t)(\mu_k^t - \tilde{g}_k^t)^T.$$

$\sigma_k^t$ is a matrix whose dimension is $N_\theta \times N_\theta$, that is, $\sigma_k^t \in R^{N_\theta \times N_\theta}$.

Then, the participating node *k* determines the first covariance mean matrix information $V_k^t$ based on the

covariance matrix information $\sigma_k^t$ and the second covariance mean matrix information $V_k^{t-1}$, where $V_k^t \in R^{N_\theta \times N_\theta}$. For example, $V_k^t$ satisfies the following:

$$V_k^t = \left(1 - \frac{1}{t}\right) V_k^{t-1} + \frac{1}{t}\sigma_k^t,$$

that is,

$$V_k^t = \left(1 - \frac{1}{t}\right) V_k^{t-1} + \frac{1}{t}(\mu_k^t - \tilde{g}_k^t)(\mu_k^t - \tilde{g}_k^t)^T.$$

In this application, covariance mean matrix information $V_k^1$ obtained through the first time of model training performed by the participating node $k$ is covariance matrix information $\sigma_k^1$ of a deviation between the gradient information $\tilde{g}_k^1$ and the center vector information $\mu_k^1$.

In this implementation, the participating node $k$ determines current covariance mean matrix information based on gradient information obtained through a current time of model training and covariance mean matrix information obtained through a previous time of model training. In this way, iterative calculation after each time of model training that is performed based on all gradient information obtained through all past model training after each time of model training can be avoided, storage overheads can be reduced, and information processing efficiency can be improved.

In the foregoing descriptions, the first center vector information $\mu_k^t$ and the first covariance mean matrix information $V_k^t$ are calculated by using an averaging method. However, this application is not limited thereto. The first center vector information and the first covariance mean matrix information may alternatively be expressed in a more general manner. For example,

$$\mu_k^t = (1 - \beta)\mu_k^{t-1} + \beta\tilde{g}_k^t,$$

and

$$V_k^t = (1 - \delta)V_k^{t-1} + \delta(\mu_k^t - \tilde{g}_k^t)(\mu_k^t - \tilde{g}_k^t)^T.$$

$\beta$ and $\delta$ are weighting coefficients. $\beta$ and $\delta$ are both floating point numbers less than 1.

After determining the first covariance mean matrix information, the participating node k decomposes the first covariance mean matrix information through eigenvalue decomposition (eigenvalue decomposition, EVD), to obtain the first principal component matrix information $U_k^t$ of the first covariance mean matrix information. That is,

$$U_k^t = EVD_{M_\theta}(V_k^t).$$

$U_k^t$ includes $M_\theta$ eigenvectors corresponding to $M_\theta$ eigenvalues of $V_k^t$, that is, $U_k^t \in R^{N_\theta \times M_\theta}$. Optionally, $U_k^t$ includes $M_\theta$ eigenvectors corresponding to $M_\theta$ eigenvalues with largest amplitudes of $V_k^t$. In other words, $U_k^t$ includes $M_\theta$ principal eigenvectors corresponding $M_\theta$ principal eigenvalues of $V_k^t$.

S203. The participating node sends the first compression kernel information to the central node.

Correspondingly, the central node receives the first compression kernel information from the participating node.

Optionally, the central node may configure, for the participating node, a first resource for sending the first compression kernel information, and the participating node sends the first compression kernel information to the central node on the first resource.

For example, the central node may configure the plurality of participating nodes to send first compression kernel information on the first resource, so that the compression kernel information sent by the plurality of participating nodes may be superposed on the first resource on an air interface, and the central node may receive superposed compression kernel information on the first resource.

In an implementation, the participating node periodically sends the compression kernel information to the central node based on a period of $T_1$, where $T_1$ is an integer greater than 1. Therefore, that the participating node sends the first compression kernel information to the central node includes: When $t/T_1$ is an integer, the participating node sends the first compression kernel information to the central node.

The participating node may update the compression kernel information in the manner described in S202 after each time of model training. The participating node sends compression kernel information updated most recently to the central node after updating the compression kernel information every $T_1$ times, so that the central node determines global compression kernel information based on the received first compression kernel information of the plurality of participating nodes, and sends the global compression kernel information to the participating node. In this way, the participating node can compress to-be-sent gradient information based on the global compression kernel information, to improve a compression rate of the gradient information.

In another implementation, each time the participating node updates the compression kernel information, the participating node sends updated compression kernel information to the central node, so that the central node determines global compression kernel information based on received first compression kernel information of the plurality of participating nodes, and sends the global compression kernel information to the participating node. In this way, the participating node can compress to-be-sent gradient information based on the global compression kernel information, to improve a compression rate of gradient information.

For a specific manner in which the central node determines the first global compression kernel information, refer to the descriptions of the embodiment shown in FIG. 3.

After the participating node $k$ obtains the first compression kernel information, the participating node k may send the first compression kernel information to the central node. Specifically, the participating node $k$ may obtain a transmission parameter, and transmit the first compression kernel information by using the transmission parameter.

If the first compression kernel information includes the first center vector information $\mu_k^t$, the participating node $k$ sends, to the central node, first center vector information weighted by using the transmission parameter, that is, $p_k^{t,\mu}\mu_k^t$. $p_k^{t,\mu}$ satisfies the following:

$$p_k^{t,\mu} = \frac{\sqrt{\rho}}{h_k^{t,\mu}}.$$

$h_k^{t,\mu}$ is channel fading that is between the participating node $k$ and the central node and that corresponds to center vector information obtained through a $t^{th}$ time of update.

Alternatively, the participating node $k$ may determine a value of a transmission parameter $p_k^{t,\mu}$ based on a relationship between the truncation threshold $\gamma$ and channel fading $h_k^{t,\mu}$, to determine whether to send weighted first center vector information to the central node. $p_k^{t,\mu}$ satisfies the following:

$$p_k^{t,\mu} = \begin{cases} \frac{\sqrt{\rho}}{h_k^{t,\mu}}, & |h_k^{t,\mu}| > \gamma \\ 0, & |h_k^{t,\mu}| \leq \gamma \end{cases}.$$

When $|h_k^t| > \gamma$, the participating node $k$ sends, to the central node, the first center vector information weighted by using the transmission parameter; otherwise, the participating node $k$ does not send the first center vector information.

If the first compression kernel information includes the first principal component matrix information Uk, the participating node $k$ sends, to the central node, first principal component matrix information weighted by using the transmission parameter, that is, $p_k^{t,U} U_k^t$ . $p_k^{t,U}$ satisfies the following:

$$p_k^{t,U} = \frac{\sqrt{\rho}}{h_k^{t,U}}.$$

$h_k^{t,U}$ is channel fading that is between the participating node $k$ and the central node and that corresponds to principal component matrix information obtained through a $t^{th}$ time of update principal component matrix.

Alternatively, the participating node $k$ may determine a value of a transmission parameter $p_k^{t,U}$ based on a relationship between the truncation threshold $\gamma$ and channel fading $h_k^{t,U}$ , to determine whether to send weighted first principal component matrix information to the central node. $p_k^{t,U}$ satisfies the following:

$$p_k^{t,U} = \begin{cases} \frac{\sqrt{\rho}}{h_k^{t,U}}, & \left|h_k^{t,U}\right| > \gamma \\ 0, & \left|h_k^{t,U}\right| \le \gamma \end{cases}.$$

When $\left|h_k^{t,U}\right| > \gamma$ , the participating node $k$ sends, to the central node, the first principal component matrix information weighted by using the transmission parameter; otherwise, the participating node $k$ does not send the first principal component matrix information.

S204. The participating node receives first information from the central node, where the first information indicates first global compression kernel information, and the first global compression kernel information is used for compressing gradient information obtained through model training.

After receiving the first information from the central node, the participating node compresses the to-be-sent gradient information based on the first global compression kernel information, to obtain compressed gradient information. If the second global compression kernel information used for compressing the first gradient information is global compression kernel information obtained through an $l^{th}$ time of update by the central node, the first global compression kernel information is global compression kernel information updated by the central node for an $(l+1)^{th}$ time. The first global compression kernel information includes first global center vector information $\mu^{l+1}$ and first global principal component matrix information $U^{l+1}$.

For example, after the participating node $k$ receives the first information and determines that the central node updates the global compression kernel to the first global compression kernel information, the participating node $k$ performs the $(t+i)^{th}$ time of model training to obtain second gradient information $\tilde{g}_k^{t+i}$ , where i is a positive integer. The participating node $k$ compresses the second gradient information based on the first global compression kernel information, to obtain second compressed gradient information $s_k^{t+i}$ . $s_k^{t+i}$ satisfies the following:

$$s_k^{t+i} = \left(U^{(l+1)}\right)^T \left(\tilde{g}_k^{t+i} - \mu^{(l+1)}\right).$$

In addition, after obtaining the second gradient information, the participating node $k$ updates compression kernel information based on the second gradient information (that is, $(t+i)^{th}$ time of updating of the compression kernel information). The compression kernel information includes the first center vector information $\mu_k^{t+i}$ and/or the first principal component matrix information $U_k^{t+i}$ . For details, refer to the foregoing descriptions of updating the compression kernel information after the $t^{th}$ time of model training. For brevity, details are not described herein again.

In an implementation, the participating node periodically updates the compression kernel information based on the period of $T_1$. After the participating node obtains compression kernel information updated for the t+i times, if $(t + i)/T_1$ is

not an integer, the participating node does not send the compression kernel information updated for the t+i times to the central node; or if $(t + i)/T_1$ is an integer, the participating node sends the compression kernel information updated for t+i times to the central node.

In another implementation, each time the participating node updates the compression kernel information, and sends updated compression kernel information to the central node, the participating node sends the compression kernel information to the central node.

According to the foregoing solution provided in this application, a gradient information compression method applicable to the federated learning is proposed based on a correlation between gradient information obtained through model training. The participating node dynamically tracks and learns compression kernel information through the model training, and feeds back the compression kernel information to the central node, so that the central node obtains global compression kernel information based on compression kernel information provided by the plurality of participating nodes, and notifies the participating node of the global compression kernel information; and the participating node compresses the gradient information through PCA based on the global compression kernel information. Therefore, adverse impact of information compression on a training result can be reduced, to improve a compression rate of the gradient information, and improve transmission efficiency of the gradient information.

The foregoing describes, with reference to FIG. 2, an example of the information processing method, provided in this application, in which the participating node dynamically tracks and learns compression kernel information through model training, and feeds back the compression kernel information to the central node, to obtain global compression kernel information that is from the central node and that is used for compressing gradient information. With reference to FIG. 3, the following describes a method for obtaining global compression kernel information by the central node based on compression kernel information from the participating node provided in this application.

FIG. 3 is a schematic flowchart of an information processing method 300 according to an embodiment of this application. In the information processing method 300 shown in FIG. 3, a central node and K participating nodes perform joint training of an intelligent model. K is an integer greater than or equal to 2. The K participating nodes include but are not limited to a participating node 1 and a participating node 2 shown in FIG. 3. If the K participating nodes further include another participating node not shown in FIG. 3, refer to the participating node shown in FIG. 3 for implementation.

S301. The participating node 1 and the participating node 2 separately send compression kernel information to the central node.

After the participating node 1 and the participating node 2 separately perform a $t^{th}$ time of model training, the participating node 1 obtains gradient information $\tilde{g}_1^t$, and the participating node 2 obtains the gradient information $\tilde{g}_2^t$.

The participating node 1 obtains the gradient information $\tilde{g}_1^t$, and determines compression kernel information based on gradient information obtained through all past model training. The compression kernel information may include center vector information $\mu_1^t$ and/or principal component matrix information $U_1^t$. The participating node 2 obtains the gradient information $\tilde{g}_2^t$, and determines compression kernel information based on gradient information obtained through all past model training. The compression kernel information may include center vector information $\mu_2^t$ and/or principal component matrix information $U_2^t$. For an implementation of determining the compression kernel information by the participating node, refer to the descriptions of the embodiment shown in FIG. 2. For brevity, details are not described herein again.

The participating node may send the compression kernel information to the central node after each time of updating the compression kernel information. For example, the participating node 1 and the participating node 2 separately send, to the central node, compression kernel information updated through the $t^{th}$ time of model training. Alternatively, the participating node periodically sends the compression kernel information to the central node based on a period of Ti, where $t/T_1$ is an integer; and the participating node 1 and the participating node 2 separately send, to the central node, compression kernel information updated through the $t^{th}$ time of model training. This is not limited in this application.

Optionally, both the participating node 1 and the participating node 2 send the compression kernel information obtained by the participating node 1 and the participating node 2 to the central node on a first resource. The first resource may be preconfigured by the central node for the participating node.

S302. The central node receives compression kernel information from a plurality of participating nodes, to obtain first global compression kernel information.

The plurality of participating nodes include the participating node 1 and the participating node 2.

In an implementation, the plurality of participating nodes send, on the first resource, compression kernel information obtained by the plurality of participating nodes. The central node receives compression kernel information from the plurality of participating nodes on the first resource, to obtain aggregated compression kernel information. The aggregated compression kernel information is compression kernel information obtained by superposing the compression kernel information of the plurality of participating nodes on the first resource.

The plurality of participating nodes all send the compression kernel information on the first resource, so that the compression kernel information of the plurality of participating nodes is superposed on a radio channel (or on an air interface (air interface) of the central node), and the central node receives, on the first resource, the aggregated compression kernel information obtained by superposing the plurality of pieces of compression kernel information.

After obtaining the aggregated compression kernel information, the central node obtains the first global compression kernel information based on the aggregated compression kernel information. The first global compression kernel information includes first global center vector information $\mu^{l+1}$ and first global principal component matrix information $U^{l+1}$. The first global compression kernel information is global compression kernel information obtained through an $(l+1)^{\text{th}}$ time of update by the central node.

If the compression kernel information sent by the participating node includes center vector information $\mu_k^t$, the aggregated compression kernel information obtained by the participating node includes aggregated center vector information $y^{t,\mu}$. The aggregated center vector information $y^{t,\mu}$ is center vector information that is obtained by superposing center vector information of the plurality of participating nodes on the first resource and that is propagated through a channel.

$$y^{t,\mu} = \sum_{k=1}^{K} h_k^{t,\mu} p_k^{t,\mu} \mu_k^t + n^{t,\mu}.$$

$n^{t,\mu} \in C^{N_\theta}$ is noise, and $C^x$ represents a complex number vector set whose dimension is $x$.

Then, the central node determines the first global center vector information $\mu^{l+1}$ based on the aggregated center vector information $y^{t,\mu}$ received on the first resource.

$$\mu^{l+1} = \frac{1}{\sqrt{\rho K}} Re(y^{t,\mu}).$$

Re(x) indicates that a real part of $x$ is taken.

Optionally, the central node and the participating node may reach a consensus, through information exchange, on whether the participating node sends the center vector information. In this case, the central node may determine a quantity $K^\mu$ of participating nodes that are in the K participating nodes and that send center vector information, and the central node may determine the first global central vector $\mu^{l+1}$ based on $K^\mu$. $\mu^{l+1}$ satisfies the following:

$$\mu^{l+1} = \frac{1}{\sqrt{\rho K^\mu}} Re(y^{t,\mu}).$$

In an implementation, before sending the compression kernel information, the participating node sends transmission parameter information to the central node. A transmission parameter indicates whether a transmission parameter $p_k^{t,\mu}$ is 0. In this case, the central node may determine, based on transmission parameter information of the K participating nodes, that transmission parameters of the $K^\mu$ participating nodes are not 0, in other words, the $K^\mu$ participating nodes send the center vector information. The central node may determine the first global center vector information $\mu^{l+1}$ based on $K^\mu$.

In another implementation, channel fading $h_k^{t,\mu}$ is obtained through estimation based on a reference signal transmitted between the central node and the participating node, and the central node and the participating node may reach a consensus on the channel fading through information exchange. Both the participating node and the central node determine a value of the transmission parameter $p_k^{t,\mu}$ based on a relationship between a truncation threshold $\gamma$ and the channel fading $h_k^{t,\mu}$, so that the central node can determine, based on a transmission parameter of each participating node, the quantity $K^\mu$ of participating nodes that send the center vector information.

For example, in the case of channel reciprocity, the central node may send a reference signal to the participating node, and the participating node obtains channel fading through estimation based on the reference signal. Based on the channel reciprocity, the participating node may use the channel fading as $h_k^{t,\mu}$, and the participating node may feed back channel state information to the central node, to notify the central node of estimated channel fading $h_k^{t,\mu}$ obtained by the participating node, so that the central node and the participating node reach a consensus on the channel fading $h_k^{t,\mu}$. For another example, the participating node may send a reference signal to the central node, the central node estimates, based on the reference signal, channel fading $h_k^{t,\mu}$ corresponding to a channel in a direction from the participating node to the central node, and the central node sends channel state information to the participating node, to notify the participating node of estimated channel fading $h_k^{t,\mu}$, so that the central node and the participating node reach a consensus on the channel fading $h_k^{t,\mu}$.

Both the participating node and the central node determine a value of the transmission parameter $p_k^{t,\mu}$ based on a relationship between the truncation threshold $\gamma$ and the channel fading $h_k^{t,\mu}$. Therefore, the central node may determine, based on transmission parameters of the K participating nodes, the $K^\mu$ participating nodes that send the center vector information.

$$K^\mu = \sum_{k=1}^{K} \mathbb{I}_{\left(\left|h_k^{t,\mu}\right|>\gamma\right)}.$$

The central node determines the first global center vector information $\mu^{l+1}$ based on the aggregated center vector information $y^{t,\mu}$. $\mu^{l+1}$ satisfies the following:

$$\mu^{l+1}=\frac{1}{\sqrt{\rho K^\mu}} Re(y^{t,\mu}) = \frac{1}{\sqrt{\rho\left(\sum_{k=1}^{K} \mathbb{I}_{\left(\left|h_k^{t,\mu}\right|>\gamma\right)}\right)}} Re(y^{t,\mu}).$$

The foregoing describes a manner in which the central node obtains, when the compression kernel information sent by the participating node includes the center vector information, the global center vector information based on the received compression kernel information. However, this application is not limited thereto. The compression kernel information sent by the participating node may not include the center vector information $\mu_k^t$. For example, the compression kernel information includes only the principal component matrix information. The central node may determine, based on gradient information that is obtained from a participating node k and that is obtained through all past model training of the participating node k, center vector information $\mu_k^t$ corresponding to the participating node k.

For a specific manner in which the central node determines the center vector information $\mu_k^t$, refer to the manner in which the participating node k determines the center vector information in the embodiment shown in FIG. 2. Details are not described herein again. After the central node determines the center vector information of the participating node, the central node may obtain, through calculation, a mean vector of the center vector information of the plurality of participating nodes, to obtain the first global center vector information $\mu^{l+1}$. This is not limited in this application.

If the compression kernel information sent by the participating node includes the principal component matrix information Uk, the aggregated compression kernel information obtained by the participating node includes aggregated principal component matrix information $y^{t,U}$. The aggregated principal component matrix information $y^{t,U}$ is principal component matrix information that is obtained by superposing principal component matrix information of the plurality of participating nodes on the first resource and that is propagated through a channel.

$$y^{t,U} = \sum_{k=1}^{K} h_k^{t,U} p_k^{t,U} U_k^t + n^{t,U}.$$

$n^{t,U} \in C^{N_\theta \times M_\theta}$ is noise, and $C^{x \times y}$ represents a complex matrix set whose dimension is $x \times y$.

The central node determines first global principal component matrix information $U^{l+1}$ based on the aggregated principal component matrix information $y^{t,U}$. The first global principal component matrix information is global principal component matrix information obtained by the central node through the $(l+1)^{th}$ time of update.

$$U^{l+1} = \mathcal{P}_{\mathcal{ST}_{N_\theta}^{M_\theta}} \left( \frac{1}{\sqrt{\rho K}} Re(y^{t,U}) \right).$$

$\mathcal{P}_{\mathcal{ST}_{N_\theta}^{M_\theta}}(\cdot)$ is projected input to Stiefel manifold (Stiefel manifold) space (or set) $\mathcal{ST}_{N_\theta}^{M_\theta}$, and

$\mathcal{ST}_{N_\theta}^{M_\theta} = \{\Gamma \in R^{N_\theta \times M_\theta} : \Gamma^T \times \Gamma = I\}$ includes all orthonormal $M_\theta$-dimensional frames (frames) in Euclidean space $R^{N_\theta}$. The first global principal component matrix information $U^{l+1}$ is used for representing $M_\theta$ global principal eigenvectors.

Optionally, the central node and the participating node may reach a consensus, through information exchange, on whether the participating node sends the principal component matrix information. In this case, the central node may determine a quantity $K^U$ of participating nodes that are in the K participating nodes and that send principal component matrix information, and the central node may determine the first global principal component matrix information $U^{l+1}$ based on $K^U$. $U^{l+1}$ satisfies the following:

$$U^{l+1} = \mathcal{P}_{\mathcal{ST}_{N_\theta}^{M_\theta}} \left( \frac{1}{\sqrt{\rho K^U}} Re(y^{t,U}) \right).$$

For a specific implementation in which the central node determines $K^U$, refer to the foregoing implementation in which the central node determines $K^\mu$. For brevity, details are not described herein again.

The foregoing describes a manner in which the central node obtains, when the compression kernel information sent by the participating node includes the principal component matrix information, the global principal component matrix information based on the received compression kernel information. However, this application is not limited thereto. The compression kernel information sent by the participating node may not include the principal component matrix information. For example, the compression kernel information includes only the center vector information. The central node may determine, based on the gradient information that is obtained from the participating node k and that is obtained through all the past model training of the participating node k, principal component matrix information Uk corresponding to the participating node k. For a specific manner in which the central node determines the principal component matrix information Uk , refer to the manner in which the participating node k determines the principal component matrix information in the embodiment shown in FIG. 2. Details are not described herein again. After the central node determines the principal component matrix information Uk of each participating node, the central node may obtain, through calculation, a mean matrix of the principal component matrix information of the plurality of participating nodes, to obtain the first global principal component matrix information $U^{l+1}$. This is not limited in this application.

In another implementation, the central node separately receives the compression kernel information from the plurality of participating nodes, and the central node superposes and aggregates the compression kernel information of the plurality of participating nodes to obtain the aggregated compression kernel information. Then, the central node obtains the first global compression kernel information based on the aggregated compression kernel information.

In other words, in a specific implementation, the foregoing manner in which the participating node sends the compression kernel information on the first resource may not be used. The participating node may send the compression kernel information to the central node on different resources. The central node superposes and aggregates the compression kernel information to obtain the aggregated compression kernel information, and then obtains the first global compression kernel information based on the aggregated compression kernel information.

S303. The central node sends first information, where the first information indicates the first global compression kernel information.

The central node may broadcast the first information, or may separately send the first information to the K participating nodes. This is not limited in this application.

Correspondingly, the K participating nodes receive the first global compression kernel information from the central node. After receiving the first global compression kernel information, the participating node compresses the gradient information based on the first global compression kernel information. Before the participating node receives the first global compression kernel information (including the first global center vector information $\mu^{l+1}$ and the first global principal component matrix information $U^{l+1}$) obtained through the $(l+1)^{th}$ time of update by the central node, the participating node compresses, based on second global compression kernel information (including second global center vector information $\mu^l$ and second global principal component matrix information $U^l$) obtained through an $l^{th}$ time of update by the central node, gradient information obtained through the model training. Refer to the descriptions of the embodiment shown in FIG. 2. Before sending the first global compression kernel information, the central node decompresses received compressed gradient information based on global compression kernel information sent most recently.

For example, before sending the first global compression kernel information, the central node receives the first compressed gradient information (that is, compressed gradient information obtained through the $t^{th}$ time of model training) from the participating node, and the central node decompresses the first compressed gradient information based on the second global center vector information $\mu^l$ and the second global principal component matrix information $U^l$ in the second global compression kernel information. For details, refer to the following implementation in which the central node decompresses, based on the first global compression kernel information, compressed gradient information that is from the participating node and that is obtained through a $(t+i)^{th}$ time of model training participating node. In other words, t+i in a corresponding formula may be replaced with t.

S304. The participating node 1 and the participating node 2 separately perform a $(t+i)^{th}$ time of model training to obtain gradient information.

The participating node 1 performs the $(t+i)^{th}$ time of model training to obtain gradient information $\tilde{g}_1^{t+i}$. The participating node 2 performs the $(t+i)^{th}$ time of model training to obtain gradient information $\tilde{g}_2^{t+i}$.

S305. The participating node 1 and the participating node 2 separately compress the gradient information based on the first global compression kernel information, to obtain compressed gradient information.

The participating node 1 compresses the gradient information $\tilde{g}_1^{t+i}$ based on the first global center vector information $\mu^{l+1}$ and the first global principal component matrix information $U^{l+1}$ in the first global compression kernel information, to obtain compressed gradient information $s_1^t = (U^{l+1})^T(\tilde{g}_1^t - \mu^{l+1})$. Similarly, the participating node 2 may obtain compressed gradient information $s_2^t = (U^{l+1})^T(\tilde{g}_2^t - \mu^{l+1})$.

S306. The participating node 1 and the participating node 2 separately send the compressed gradient information to the central node.

The participating node 1 and the participating node 2 may send the compressed gradient information to the central node after obtaining the compressed gradient information, or the participating node 1 and the participating node 2 may determine, based on the truncation threshold and respective channel fading, whether to send the compressed gradient information to the central node.

S307. The central node decompresses the obtained compressed gradient information based on the first global compression kernel information.

In an implementation, the plurality of participating nodes all send compressed gradient information to the central node on a second resource. The central node receives the compressed gradient information from the plurality of participating nodes on the second resource, to obtain aggregated compressed gradient information. The aggregated compressed gradient information is compressed gradient information obtained by superposing the compressed gradient information of the plurality of participating nodes on the second resource.

$$y^{t+i} = \sum_{k=1}^{K} h_k^{t+i} p_k^{t+i} s_k^{t+i} + n^{t+i}.$$

$$n^{t+i} \in C^{M_\theta}.$$

$$x^{t+i} = \frac{1}{K} \sum_{k=1}^{K} s_k^{t+i} \mathbb{I}_{\left(\left|h_k^{t+i}\right| > \gamma\right)}$$

The central node estimates a mean value of the compressed gradient information based on $y^{t+i}$, to obtain compressed gradient mean information $\hat{x}^{t+i}$. For example, the central node may estimate the compressed gradient mean information $\hat{x}^{t+i}$ based on a least square (least square, LS) method. $\hat{x}^{t+i}$ satisfies the following:

$$\hat{x}^{t+i} = arg\min_{\omega} \left\|y^{t+i} - \sqrt{\rho}K\omega\right\|_2^2 = \frac{1}{\sqrt{\rho K}} Re(y^{t+i}).$$

$\|a\|_2$ represents an $l_2$ norm ($l_2$-norm) of $a$.

Optionally, the central node and the participating node may reach a consensus, through information exchange, on whether the participating node sends the compressed gradient information. In this case, the central node may determine a quantity $K^s$ of participating nodes that are in the K participating nodes and that send compressed gradient information, and the central node may estimate the compressed gradient mean information $\hat{x}^{t+i}$ based on $K^s$. $\hat{x}^{t+i}$ satisfies the following:

$$\hat{x}^{t+i} = arg\ \underset{\omega}{min}\left\|y^{t+i} - \sqrt{\rho}K^s\omega\right\|_2^2 = \frac{1}{\sqrt{\rho K^s}}Re(y^{t+i}).$$

After obtaining the compressed gradient mean information $\hat{x}^{t+i}$, the central node decompresses the compressed gradient mean information based on the first global center vector information $\mu^{l+1}$ and the first global principal component matrix information $U^{l+1}$, to obtain estimated gradient mean information $\Delta^{t+i}$.

$$\Delta^{t+i} = U^{l+1}\hat{x}^{t+i} + \mu^{l+1}.$$

Then, the central node determines a model parameter $\theta^{t+i+1}$ of the intelligent model based on the gradient mean information.

$$\theta^{t+i+1} = \theta^{t+i} - \eta^{t+i}\Delta^{t+i}.$$

The central node sends an updated model parameter to the K participating nodes. After updating the model parameter of the intelligent model based on $\theta^{t+i+1}$, the K participating nodes perform $t + i + 1$ times of model training.

In another implementation, the plurality of participating nodes separately send compressed gradient information on different resources. The central node separately receives the compressed gradient information from the plurality of participating nodes on different resources, and separately decompresses the obtained compressed gradient information based on first global compressed gradient information, to obtain decompressed gradient information. The central node then averages the decompressed gradient information corresponding to the plurality of participating nodes, to obtain gradient mean information. Then, the central node determines a model parameter $\theta^{t+i+1}$ of the intelligent model based on the gradient mean information, and sends the model parameter $\theta^{t+i+1}$ to the K participating nodes.

According to the foregoing solution provided in this application, a gradient information compression method applicable to federated learning is proposed based on a correlation between gradient information obtained through model training. The participating node dynamically tracks and learns compression kernel information through the model training, and feeds back the compression kernel information to the central node, so that the central node obtains global compression kernel information based on compression kernel information provided by the plurality of participating nodes, and notifies the participating node of the global compression kernel information; and the participating node compresses the gradient information through PCA based on the global compression kernel information. Therefore, adverse impact of information compression on a training result can be reduced, to improve a compression rate of the gradient information, and improve transmission efficiency of the gradient information.

The methods provided in embodiments of this application are described above in detail with reference to FIG. 2 and FIG. 3. The following describes the apparatuses provided in embodiments of this application in detail. To implement functions in the method provided in the foregoing embodiments of this application, each network element may include a hardware structure and/or a software module, and implement the foregoing functions in a form of the hardware structure, the software module, or a combination of the hardware structure and the software module. Whether a function in the foregoing functions is performed in a manner of the hardware structure, the software module, or the combination of the hardware structure and the software module depends on particular applications and design constraints of the technical solutions.

FIG. 4 is a schematic block diagram of a communication apparatus according to an embodiment of this application. As shown in FIG. 4, the communication apparatus 400 may include a processing unit 410 and a transceiver unit 420.

In a possible design, the communication apparatus 400 may correspond to the participating node in the foregoing method embodiment, a chip configured (or used) in the participating node, or another apparatus, module, circuit, unit, or the like that can implement a method performed by the participating node.

It should be understood that the communication apparatus 400 may correspond to the participating node in the method in embodiments of this application, and the communication apparatus 400 may include units in the first device configured to perform the methods shown in FIG. 2 and FIG. 3. In addition, the units in the communication apparatus 400 and the foregoing other operations and/or functions are separately intended to implement corresponding procedures of the methods shown in FIG. 2 to FIG. 3.

It should be further understood that when the communication apparatus 400 is a chip configured (or used) in the participating node, the transceiver unit 420 in the communication apparatus 400 may be an input/output interface or a circuit of the chip, and the processing unit 410 in the communication apparatus 400 may be a logic circuit in the chip.

In another possible design, the communication apparatus 400 may correspond to the central node in the foregoing method embodiments, for example, a chip configured (or used) in the central node, or another apparatus, module, circuit, or unit that can implement a method performed by the central node.

It should be understood that the communication apparatus 400 may correspond to the central node in the methods shown in FIG. 2 and FIG. 3, and the communication apparatus 400 may include units of the central node configured to perform the methods shown in FIG. 2 and FIG. 3. In addition, the units in the communication apparatus 400 and the foregoing other operations and/or functions are separately intended to implement corresponding procedures of the methods shown in FIG. 2 to FIG. 3.

It should be further understood that when the communication apparatus 400 is a chip configured (or used) in a central node, the transceiver unit 420 in the communication apparatus 400 may be an input/output interface or a circuit of the chip, and the processing unit 410 in the communication apparatus 400 may be a logic circuit in the chip. Optionally, the communication apparatus 400 may further include a storage unit 430. The storage unit 430 may be configured to store instructions or data. The processing unit 410 may execute the instructions or the data stored in the storage unit, to enable the communication apparatus to implement a corresponding operation.

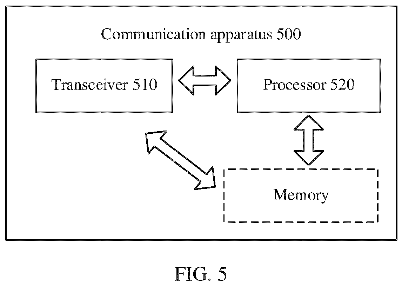

It should be understood that the transceiver unit 420 in the communication apparatus 400 may be implemented by using a communication interface (for example, a transceiver or an input/output interface), for example, may correspond to the transceiver 510 in the communication apparatus 500 shown in FIG. 5. The processing unit 410 in the communication apparatus 400 may be implemented by using at least one processor, for example, may correspond to the processor 520 in the communication apparatus 500 shown in FIG. 5. The processing unit 410 in the communication apparatus 400 may alternatively be implemented by using at least one logic circuit. The storage unit 430 in the communication apparatus 400 may correspond to the memory in the communication apparatus 500 shown in FIG. 5.

It should be further understood that a specific process in which the units perform the foregoing corresponding steps is described in detail in the foregoing method embodiments. For brevity, details are not described herein again.

FIG. 5 is a schematic structural diagram of another example of a communication apparatus 500 according to an embodiment of this application.

The communication apparatus 500 may correspond to the participating node in the foregoing method embodiment. As shown in FIG. 5, the participating node 500 includes a processor 520 and a transceiver 510. Optionally, the participating node 500 further includes a memory. The processor 520, the transceiver 510, and the memory may communicate with each other through an internal connection path, to transfer a control signal and/or a data signal. The memory is configured to store a computer program. The processor 520 is configured to execute the computer program in the memory, to control the transceiver 510 to receive and send a signal.

It should be understood that the communication apparatus 500 shown in FIG. 5 can implement the processes related to the participating node in the method embodiments shown in FIG. 2 and FIG. 3. Operations and/or functions of modules in the participating node 500 are intended to implement corresponding procedures in the foregoing method embodiment. For details, refer to the descriptions in the foregoing method embodiments. To avoid repetition, detailed descriptions are properly omitted herein.

The communication apparatus 500 may correspond to the central node in the foregoing method embodiment. As shown in FIG. 5, the central node 500 includes a processor 520 and a transceiver 510. Optionally, the central node 500 further includes a memory. The processor 520, the transceiver 510, and the memory may communicate with each other through an internal connection path, to transfer a control signal and/or a data signal. The memory is configured to store a computer program. The processor 520 is configured to execute the computer program in the memory, to control the transceiver 510 to receive and send a signal.

It should be understood that the communication apparatus 500 shown in FIG. 5 can implement the processes related to the central node in the method embodiments shown in FIG. 2 and FIG. 3. Operations and/or functions of modules in the central node 500 are intended to implement corresponding procedures in the foregoing method embodiment. For details, refer to the descriptions in the foregoing method embodiments. To avoid repetition, detailed descriptions are properly omitted herein.

The processor 520 and the memory may be integrated into a processing apparatus. The processor 520 is configured to execute program code stored in the memory, to implement the foregoing functions. During specific implementation, the memory may alternatively be integrated into the processor 520, or may be independent of the processor 520. The processor 520 may correspond to the processing unit in FIG. 4.

The transceiver 510 may correspond to the transceiver unit in FIG. 4. The transceiver 510 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the communication apparatus 500 shown in FIG. 5 can implement the processes related to the terminal device in the method embodiments shown in FIG. 2 and FIG. 3. Operations and/or functions of modules in the terminal device 500 are intended to implement corresponding procedures in the foregoing method embodiment. For details, refer to the descriptions in the foregoing method embodiments. To avoid repetition, detailed descriptions are properly omitted herein.

An embodiment of this application further provides a processing apparatus, and the processing apparatus includes a processor and a (communication) interface. The processor is configured to perform the method according to any one of the foregoing method embodiments.

It should be understood that the processing apparatus may be one or more chips. For example, the processing apparatus may be a field programmable gate array (field programmable gate array, FPGA), an application-specific integrated chip (application specific integrated circuit, ASIC), a system on chip (system on chip, SoC), a central processing unit (central processing unit, CPU), a network processor (network processor, NP), a digital signal processor (digital signal processor, DSP) circuit, a micro controller unit (micro controller unit, MCU), a programmable controller (programmable logic device, PLD), or another integrated chip.

According to the methods provided in embodiments of this application, this application further provides a computer program product. The computer program product includes computer program code. When the computer program code is executed by one or more processors, an apparatus including the processor is enabled to perform the methods in embodiments shown in FIG. 2 and FIG. 3.

The technical solutions provided in this embodiment of this application may be fully or partially implemented through software, hardware, firmware, or any combination thereof. When software is used to implement embodiments, all or a part of embodiments may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, a terminal device, a core network device, machine learning device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

According to the methods provided in embodiments of this application, this application further provides a computer-readable storage medium. The computer-readable storage medium stores program code. When the program code is run by one or more processors, an apparatus including the processor is enabled to perform the methods in embodiments shown in FIG. 2 and FIG. 3.

According to the method provided in embodiments of this application, this application further provides a system, including one or more of the foregoing participating node. The system may further include one or more of the foregoing central nodes.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate components may or may not be physically separated, and components displayed as units may or may not be physical units, may be located in one place, or may be distributed on a plurality of network units. Some or all of the units may be selected based on actual requirements to achieve the objectives of the solutions of embodiments.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An information processing method, comprising:

performing a $t^{th}$ time of model training to obtain first gradient information, wherein t is an integer greater than 1;

determining first compression kernel information based on gradient information obtained through all past model training, wherein all the past model training comprises the $t^{th}$ time of model training and at least one time of model training before the $t^{th}$ time of model training, and the gradient information obtained through all the past model training comprises the first gradient information;

sending the first compression kernel information to a central node; and

receiving first information from the central node, wherein the first information indicates first global compression kernel information, and the first global compression kernel information is used for compressing gradient information obtained through model training.

2. The method according to claim 1, wherein the determining first compression kernel information based on gradient information obtained through all past model training comprises:

determining first center vector information based on the first gradient information and second center vector information, wherein the first center vector information is used for representing a mean vector of the gradient information obtained through all the past model training, the first compression kernel information comprises the first center vector information, and the second center vector information is center vector information determined through a $(t-1)^{th}$ time of model training.

3. The method according to claim 2, wherein the determining first compression kernel information based on gradient information obtained through all past model training further comprises:

obtaining covariance matrix information of a deviation between the first gradient information and the first center vector information;

determining first covariance mean matrix information based on the covariance matrix information and second covariance mean matrix information, wherein the first covariance mean matrix information is used for representing a mean matrix of covariance matrix information of a deviation obtained through all the past model training, and the second covariance mean information is covariance mean matrix information determined through the $(t-1)^{th}$ time of model training; and

obtaining first principal component matrix information of the first covariance mean matrix information, wherein the first principal component matrix information is used for representing eigenvectors corresponding to M eigenvalues of the first covariance mean matrix information, the first compression kernel information comprises the first principal component matrix information, and M is an integer greater than 1.

4. The method according to any one of claims 1 to 3, wherein the method further comprises:

compressing second gradient information based on the first global compression kernel information, to obtain second compressed gradient information, wherein the second gradient information is gradient information obtained through a $(t+i)^{th}$ time of model training, and i is a positive integer; and

sending the second compressed gradient information.

5. The method according to claim 4, wherein the first global compression kernel information comprises global center vector information and global principal component matrix information; and

the compressing second gradient information based on the first global compression kernel information, to obtain second compressed gradient information comprises:

obtaining the second compressed gradient information based on the global principal component matrix information and a deviation between the second gradient information and the global center vector information.

6. The method according to any one of claims 1 to 5, wherein before the receiving first information from the central node, the method further comprises:

compressing the first gradient information based on second global compression kernel information, to obtain first compressed gradient information, wherein the second global compression kernel information is obtained from the central node.

7. The method according to any one of claims 1 to 6, wherein the sending the first compression kernel information to a central node comprises:

sending the first compression kernel information to the central node on a first resource.

8. The method according to any one of claims 1 to 7, wherein the sending the first compression kernel information to a central node comprises:
when $t/T_1$ is an integer, sending the first compression kernel information to the central node, wherein $T_1$ is an integer greater than 1.

9. An information processing method, comprising:

receiving first compression kernel information from a plurality of participating nodes, to obtain first global compression kernel information; and
sending first information, wherein the first information indicates the first global compression kernel information, and the first global compression kernel information is used for compressing gradient information obtained through model training.

10. The method according to claim 9, wherein
the receiving first compression kernel information from a plurality of participating nodes, to obtain first global compression kernel information comprises:

receiving the first compression kernel information from the plurality of participating nodes on a first resource, to obtain aggregated compression kernel information, wherein the aggregated compression kernel information is compression kernel information obtained by superposing the first compression kernel information of the plurality of participating nodes on the first resource; and
obtaining the first global compression kernel information based on the aggregated compression kernel information.

11. The method according to claim 9 or 10, wherein the method further comprises:

receiving compressed gradient information from the plurality of participating nodes;
obtaining compressed gradient mean information based on the compressed gradient information of the plurality of participating nodes, wherein the compressed gradient mean information is used for representing a mean vector of the compressed gradient information of the plurality of parameter nodes;
decompressing the compressed gradient mean information based on the first global compression kernel information, to obtain decompressed gradient mean information; and
updating a model parameter of an intelligent model based on the gradient mean information.

12. The method according to claim 11, wherein

the first compression kernel information comprises first center vector information, the first global compression kernel information comprises global center vector information, and the global center vector information is used for representing a mean vector of the first center vector information of the plurality of participating nodes; and
the first compression kernel information comprises first principal component matrix information, the first global compression kernel information comprises global principal component matrix information, the global principal component matrix information is used for representing M global principal eigenvectors, and M is an integer greater than 1.

13. The method according to claim 12, wherein the decompressing the compressed gradient mean information based on the first global compression kernel information, to obtain decompressed gradient mean information comprises:
decompressing the compressed gradient mean information based on the global center vector information and the global principal component matrix information, to obtain compressed gradient mean information.

14. A communication apparatus, comprising:

a processing unit, configured to perform a $t^{th}$ time of model training to obtain first gradient information, wherein t is an integer greater than 1, wherein
the processing unit is further configured to determine first compression kernel information based on gradient information obtained through all past model training, wherein all the past model training comprises the $t^{th}$ time of model training and at least one time of model training before the $t^{th}$ time of model training, and the gradient information obtained through all the past model training comprises the first gradient information; and
a transceiver unit, configured to send the first compression kernel information to a central node, wherein
the transceiver unit is further configured to receive first information from the central node, wherein the first information indicates first global compression kernel information, and the first global compression kernel information is used for compressing gradient information obtained through model training.

15. The apparatus according to claim 14, wherein
the processing unit is specifically configured to determine first center vector information based on the first gradient information and second center vector information, wherein the first center vector information is used for representing a mean vector of the gradient information obtained through all the past model training, the first compression kernel information comprises the first center vector information, and the second center vector information is center vector information determined through a $(t-1)^{th}$ time of model training.

16. The apparatus according to claim 15, wherein the processing unit is specifically configured to:

    obtain covariance matrix information of a deviation between the first gradient information and the first center vector information;
    determine first covariance mean matrix information based on the covariance matrix information and second covariance mean matrix information, wherein the first covariance mean matrix information is used for representing a mean matrix of covariance matrix information of a deviation obtained through all the past model training, and the second covariance mean information is covariance mean matrix information determined through the $(t-1)^{th}$ time of model training; and
    obtain first principal component matrix information of the first covariance mean matrix information, wherein the first principal component matrix information is used for representing eigenvectors corresponding to M eigenvalues of the first covariance mean matrix information, the first compression kernel information comprises the first principal component matrix information, and M is an integer greater than 1.

17. The apparatus according to any one of claims 14 to 16, wherein

    the processing unit is further configured to compress second gradient information based on the first global compression kernel information, to obtain second compressed gradient information, wherein the second gradient information is gradient information obtained through a $(t+i)^{th}$ time of model training, and i is a positive integer; and
    the transceiver unit is further configured to send the second compressed gradient information.

18. The apparatus according to claim 17, wherein the first global compression kernel information comprises global center vector information and global principal component matrix information; and
the processing unit is further configured to obtain the second compressed gradient information based on the global principal component matrix information and a deviation between the second gradient information and the global center vector information.

19. The apparatus according to any one of claims 14 to 18, wherein
the processing unit is further configured to: before receiving the first information from the central node, compress the first gradient information based on second global compression kernel information, to obtain first compressed gradient information, wherein the second global compression kernel information is obtained from the central node.

20. The apparatus according to any one of claims 14 to 19, wherein
the transceiver unit is specifically configured to send the first compression kernel information to the central node on a first resource.

21. The apparatus according to any one of claims 14 to 20, wherein
the transceiver unit is specifically configured to: when $t/T_1$ is an integer, send the first compression kernel information to the central node, wherein $T_1$ is an integer greater than 1.

22. An information processing apparatus, comprising:

    a processing unit, configured to obtain first global compression kernel information based on received first compression kernel information from a plurality of participating nodes; and
    a transceiver unit, configured to send first information, wherein the first information indicates the first global compression kernel information, and the first global compression kernel information is used for compressing gradient information obtained through model training.

**23.** The apparatus according to claim 22, wherein

the transceiver unit is further configured to receive the first compression kernel information from the plurality of participating nodes on a first resource, to obtain aggregated compression kernel information, wherein the aggregated compression kernel information is compression kernel information obtained by superposing the first compression kernel information of the plurality of participating nodes on the first resource; and
the processing unit is specifically configured to obtain the first global compression kernel information based on the aggregated compression kernel information.

**24.** The apparatus according to claim 22 or 23, wherein the transceiver unit is further configured to receive compressed gradient information from the plurality of participating nodes; and the processing unit is further configured to:

obtain compressed gradient mean information based on the compressed gradient information of the plurality of parameter nodes, wherein the compressed gradient mean information is used for representing a mean vector of the compressed gradient information of the plurality of parameter nodes;
decompress the compressed gradient mean information based on the first global compression kernel information, to obtain decompressed gradient mean information; and
update a model parameter of an intelligent model based on the gradient mean information.

**25.** The apparatus according to claim 24, wherein

the first compression kernel information comprises first center vector information, the first global compression kernel information comprises global center vector information, and the global center vector information is used for representing a mean vector of the first center vector information of the plurality of participating nodes; and
the first compression kernel information comprises first principal component matrix information, the first global compression kernel information comprises global principal component matrix information, the global principal component matrix information is used for representing M global principal eigenvectors, and M is an integer greater than 1.

**26.** The apparatus according to claim 25, wherein the processing unit is specifically configured to decompress the compressed gradient mean information based on the global center vector information and the global principal component matrix information, to obtain compressed gradient mean information.

**27.** A communication apparatus, comprising at least one processor, coupled to a memory, wherein

the memory is configured to store a program or instructions; and
the at least one processor is configured to execute the program or the instructions, to enable the apparatus to implement the method according to any one of claims 1 to 8, or implement the method according to any one of claims 9 to 13.

**28.** A chip, comprising at least one logic circuit and an input/output interface, wherein
the logic circuit is configured to control the input/output interface and perform the method according to any one of claims 1 to 8, or implement the method according to any one of claims 9 to 13.

**29.** A computer-readable storage medium, storing instructions, wherein a computer is enabled, when the instructions are run on the computer, to implement the method according to any one of claims 1 to 8, or implement the method according to any one of claims 9 to 13.

**30.** A computer program product, comprising instructions, wherein a computer is enabled, when the instructions are run on the computer, to perform the method according to any one of claims 1 to 8 or the method according to any one of claims 9 to 13.

**31.** A communication system, comprising the communication apparatus according to any one of claims 14 to 21 and the communication apparatus according to any one of claims 22 to 26.

Participating
node 1

Dataset 1

Model
parameter

Central node

Update a model
parameter based on
aggregated gradient
information

Participating
node 2

Gradient
information

Dataset 2

⋮

Participating
node N

Dataset N

FIG. 1

200

| Perform a $t^{th}$ time of model training to obtain first gradient information | S201 |

| Determine first compression kernel information based on gradient information obtained through all past model training | S202 |

| Send the first compression kernel information to a central node | S203 |

| Receive first information from the central node, where the first information indicates first global compression kernel information, and the first global compression kernel information is used for compressing gradient information obtained through model training | S204 |

FIG. 2

300

| Central node | | Participating node 1 | Participating node 2 |

S301. Send compression kernel information

S302. Receive compression kernel information from a plurality of participating nodes, to obtain first global compression kernel information

S303. Send the first global compression kernel information

S304. Perform a $(t+i)^{th}$ time of model training to obtain gradient information

S305. Compress the gradient information based on first compression kernel information, to obtain compressed gradient information

S306. Send the compressed gradient information

S307. Decompress the obtained compressed gradient information based on the first global compression kernel information

FIG. 3

Communication apparatus 400

Processing unit 410

Transceiver unit 420

Storage unit 430

FIG. 4

Communication apparatus 500

| Transceiver 510 | ⟺ | Processor 520 |

Memory

FIG. 5

<div align="center">

**INTERNATIONAL SEARCH REPORT**

</div>

| | International application No. |
|---|---|
| | **PCT/CN2023/083106** |

| **A.** | **CLASSIFICATION OF SUBJECT MATTER** |
|---|---|

G06N 20/00(2019.01)i

According to International Patent Classification (IPC) or to both national classification and IPC

| **B.** | **FIELDS SEARCHED** |
|---|---|

Minimum documentation searched (classification system followed by classification symbols)

IPC:G06N

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI, CNABS: 联邦, 学习, 梯度, 压缩, 全局, 中心, 参与, 模型, 训练, 内核, 偏差, 向量, 协方差, 均值, federated, learning, gradient, compress, global, center, participant, model, train, kernel, deviation, vector, covariance, mean s value

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 112906046 A (TSINGHUA UNIVERSITY et al.) 04 June 2021 (2021-06-04) description, paragraphs 2-176 | 1-31 |
| A | CN 111901829 A (JIANGSU INTELLIGENT TRANSPORTATION AND INTELLIGENT DRIVING RESEARCH INSTITUTE et al.) 06 November 2020 (2020-11-06) entire document | 1-31 |
| A | CN 113591145 A (XIDIAN UNIVERSITY) 02 November 2021 (2021-11-02) entire document | 1-31 |
| A | CN 113934578 A (UNIVERSITY OF ELECTRONIC SCIENCE AND TECHNOLOGY OF CHINA) 14 January 2022 (2022-01-14) entire document | 1-31 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2023** | **15 June 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/083106**

| Patent document cited in search report | | | Publication date (day/month/year) | Patent family member(s) | | | Publication date (day/month/year) |
|---|---|---|---|---|---|---|---|
| CN | 112906046 | A | 04 June 2021 | None | | | |
| CN | 111901829 | A | 06 November 2020 | CN | 111901829 | B | 10 May 2022 |
| CN | 113591145 | A | 02 November 2021 | None | | | |
| CN | 113934578 | A | 14 January 2022 | CN | 113934578 | B | 01 July 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210303188